# EUROPEAN PATENT SPECIFICATION

(11) **EP 2 565 427 B1**
(45) Date of publication and mention of the grant of the patent: **02.05.2018**
(21) Application number: 12180738.2
(22) Date of filing: 16.08.2012
(51) Int. Cl.: F02C 9/40, F02C 9/34, F23R 3/28, F23R 3/34, F23R 3/36

(54) **Method for switching over a combustion device of a gas turbine engine from operation with a first premixed fuel to a second premixed fuel**
Verfahren zum Umschalten einer Verbrennungsvorrichtung eines Gasturbinentriebwerks von einem Betrieb mit einem ersten Vormischbrennstoff zu einem zweiten Vormischbrennstoff
Procédé de commutation d'un dispositif de combustion d'un moteur à turbine à gaz d'une opération avec un premier carburant prémélangé à un deuxième carburant prémélangé

(30) Priority: 02.09.2011 IT MI20111576
(43) Date of publication of application: 06.03.2013
(73) Proprietor: Ansaldo Energia Switzerland AG, 5401 Baden (CH)
(72) Inventor: Bothien, Mirko, 8037 Zürich (CH); Zajadatz, Martin, 79790 Küssaberg/Dangstetten (DE); Pennell, Douglas, 5210 Windisch (CH)
(74) Representative: Bernotti, Andrea

(56) References cited:
- EP-A1- 2 292 907
- EP-A1- 2 299 091
- EP-A2- 1 914 407
- EP-A2- 1 942 260
- WO-A1-01/83965
- WO-A1-2009/068425
- JP-A- 7 166 891
- JP-A- 2000 328 965
- US-A1- 2005 034 457

## Description

### TECHNICAL FIELD

The present invention relates to a method for switching over a combustion device. In particular, according to the method switch over occurs between a first and a second fuel that are burnt in premix conditions. For example the combustion device is a part of a gas turbine.

### BACKGROUND

Combustion devices such as those combustion devices that are part of a gas turbine are fed with a fuel and an oxidiser to generate flue gases that are expanded in a turbine.

In order to keep emissions (for example NOx, CO emissions) at low levels, premix combustion devices can be used.

In these kinds of combustion devices a fuel is first mixed with the oxidiser and the mixture is then burnt.

The fuel can be a liquid fuel (for example oil) or a gaseous fuel (for example natural gas or methane).

Usually gas turbines are provided with supply lines for both liquid and gaseous fuel such that, if during operation one of the fuels is not available, operation can continue with the other fuel.

For these reasons it is often necessary to switch over from one fuel to the other; switch over must be carried out online (i.e. during operation without stopping the gas turbine), because it is not possible to disconnect the generator driven by the gas turbine from the grid.

Traditionally, in order to switch over from one fuel to another fuel (both burnt in premix conditions) the amount of the first fuel is gradually reduced from its operational amount to zero, while, at the same time, the amount of the second fuel is gradually increased from zero to its operational amount. The total fuel supplied into the combustion device (being the sum of the first and second fuels) must be controlled such that it does not exceed a given amount that could cause damage.

Even if largely used, in some cases this switch over could be troubling.

In fact, during the switch over pressure and thermal pulsations can generate.

Pressure and thermal pulsations are very detrimental for the combustion device lifetime (in addition they are also troubling for the turbine downstream of the combustion device) and must therefore be counteracted.

From the WO 01/83965 A1 a gas turbine with two fuel control valves working with pulse-width-modulation to control a a premixed fuel flow and a parallel pilot flame are known. The WO 2009/068425 A1 discloses a burner with two supplies for a premixed fuel and a pilot fuel. It further discloses operation with a pilot flame only.

EP 2 292 907 discloses a method for switching over a gas turbine burner operation from liquid to gas fuel and vice-versa

### SUMMARY

An aspect of the present invention thus includes providing a method for switching over a combustion device operating in premix conditions from one fuel type to another fuel type by which pressure and thermal pulsations are counteracted.

This and further aspects are attained according to the invention by providing a method in accordance with the accompanying claims.

### BRIEF DESCRIPTION OF THE DRAWINGS

Further characteristics and advantages of the invention will be more apparent from the description of a preferred but non-exclusive embodiment of the method illustrated by way of non-limiting example in the accompanying drawings, in which:

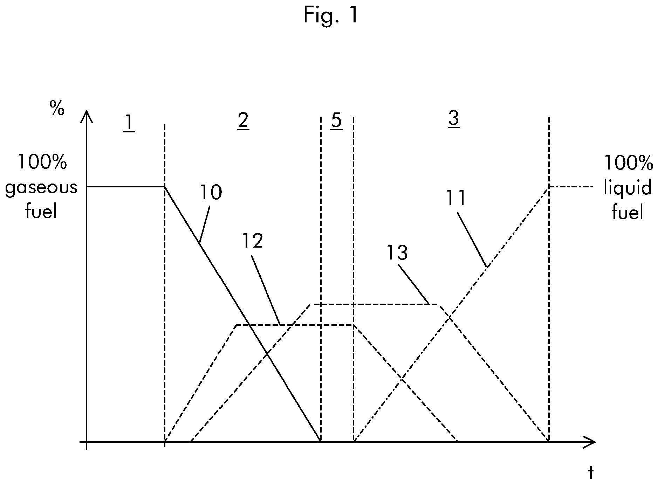

Figure 1 is a schematic view of an embodiment of the method; in particular figure 1 shows the fuel percentages % as a function of the time t.

### DETAILED DESCRIPTION OF EMBODIMENTS OF THE INVENTION

With reference to figure 1, initially (in a phase 1) the combustion device (for example the combustion device of a gas turbine, e.g. a burner of a gas turbine) operates with a first premix fuel 10.

The method for switching over a combustion device from operation with this first premix fuel 10 (for example a gas fuel; a first premixed fuel is a first fuel type, which is mixed with combustion air before ignition for premixed combustion) to a second premix fuel 11 (a second premixed fuel is a second fuel type, which is mixed with combustion air before ignition for premixed combustion; for example a liquid fuel or a second fuel gas type, with a fuel composition which is different from the fuel composition of the first fuel type) comprises reducing and stopping the first premix fuel supply (phase 2) and then starting a second premix fuel supply (phase 3).

In an intermediate phase 5 after the first premix fuel supply stop (phase 2) and before the second premix fuel supply start (phase 3), the combustion device is operated with one or more pilot fuels 12, 13 generating only diffusion flames.

For example the pilot fuels include a first and a second pilot fuels 12, 13 , i.e. a first fuel type, which is injected to form a pilot flame, and a second fuel type, which is injected to form a pilot flame (the first fuel type used as a pilot fuel can for example be the same fuel type as the fuel type, which is used for the first premixed fuel, and the second fuel type used as a pilot fuel can for example be the same fuel type as the fuel type, which is used for the second premixed fuel), According to one embodiment both pilot fuels 12, 13 are fed and fully support the combustion device operation during the intermediate phase 5; i.e. only the two pilot fuels are feed into the combustor during this phase. Consequently, no premixed fuel is feed into the combustor during this phase.

In addition, both the first and the second pilot fuels 12, 13 are injected together with both the first premix fuel 10 and the second premix fuel 11.

As shown in figure 1, the first pilot fuel 12 supply starts before the second pilot fuel 13 supply starts and the first pilot fuel 12 supply ends before the second pilot fuel 13 supply ends.

In the present example the first premix fuel 10 is a gaseous fuel and the second premix fuel 11 is a liquid fuel (i.e. a switch over from gaseous to liquid fuel occurs), anyhow the first premix fuel 10 can also be a liquid fuel and the second premix fuel 11 can also be a gaseous fuel (in this case a switch over from liquid to gaseous fuel occurs). In addition, it is also possible that the first and the second premix fuels 10, 11 are both liquid or gaseous fuels.

Preferably, when the first premix fuel 10 is a gaseous fuel also the first pilot fuel 12 is a gaseous fuel and when the first premix fuel 10 is a liquid fuel also the first pilot fuel 12 is a liquid fuel.

Likewise, when the second premix fuel 11 is a gaseous fuel also the second pilot fuel 13 is a gaseous fuel and when the second premix fuel 11 is a liquid fuel also the second pilot fuel 13 is a liquid fuel.

Typically, the first premix fuel 10 and the first pilot fuel 12 are the same fuel (for example oil in case of liquid fuel or natural gas in case of gaseous fuel) and the second premix fuel 11 and the second pilot fuel 13 are the same fuel (also in this case, for example oil in case of liquid fuel or natural gas in case of gaseous fuel).

During operation, even if during transient operation (i.e. phase 2) pulsations generate, they are not amplified but they are damped during the phase 5 when only a diffusion flame is provided within the combustion device, because the diffusion flame is very stable.

In addition, during the phase 3 only very small pulsations can generate (that do not adversely affect the combustion device) and no pulsations from the phase 2 can be amplified, because of the intermediate phase 5 that stabilises the combustion.

The length of the phase 5 is to be chosen according to the particular conditions and needs, anyhow its length can be of some minutes (in some cases also a length of one minute can be enough to stabilise the combustion and damp the pulsations). Since the length of the phase 5 is limited, emissions such as NOx or CO emissions (that could increase during the phase 5 due to the diffusion flame) are not an issue.

Of course the features described may be independently provided from one another.

In practice the materials used and the dimensions can be chosen at will according to requirements and to the state of the art.

### REFERENCE NUMBERS

1, 2, 3, 5 phase
10 first premix fuel
11 second premix fuel
12, 13 pilot fuel

## Claims

1. Method for switching over a combustion device from operation with a first premix fuel (10) to a second premix fuel (11) comprising:
reducing and stopping a first premix fuel supply, then
starting a second premix fuel supply,
**characterised in that**
in an intermediate phase (5), after the first premix fuel supply stops and before the second premix fuel supply starts, the combustion device is operated with one or more pilot fuels (12, 13) generating only diffusion flames.

2. Method according to claim 1, **characterised in that** the pilot fuels (12, 13) include a first and a second pilot fuels, wherein during the intermediate phase (5) both pilot fuels (12, 13) are fed.

3. Method according to claim 2, **characterised in that** during the intermediate phase (5) the first and second pilot fuels (12, 13) fully support the combustion device operation.

4. Method according to claim 2, **characterised in that** both the first and the second pilot fuels (12, 13) are first injected together with the first premix fuel (10) and then injected together the second premix fuel (11).

5. Method according to claim 4, **characterised in that** the first pilot fuel supply starts before the second pilot fuel supply starts.

6. Method according to claim 3, **characterised in that** the first pilot fuel supply ends before the second pilot fuel supply ends.

7. Method according to claim 1, **characterised in that** the first premix fuel (10) is a gaseous fuel and the second premix fuel (11) is a liquid fuel or vice versa.

8. Method according to claim 7, **characterised in that** when the first premix fuel (10) is a gaseous fuel also the first pilot fuel (12) is a gaseous fuel and when the first premix fuel (10) is a liquid fuel also the first pilot fuel (12) is a liquid fuel.

9. Method according to claim 7, **characterised in that** when the second premix fuel (11) is a gaseous fuel also the second pilot fuel (13) is a gaseous fuel and when the second premix fuel (11) is a liquid fuel also the second pilot fuel (13) is a liquid fuel.

10. Method according to claim 7, **characterised in that** the first premix fuel (10) and the first pilot fuel (12) are the same fuel and the second premix fuel (11) and the second pilot fuel (13) are the same fuel.

## Patentansprüche

1. Verfahren zum Umschalten einer Verbrennungsvorrichtung vom Betrieb mit einem ersten vorgemischten Brennstoff (10) auf einen zweiten vorgemischten Brennstoff (11), enthaltend:
Reduzieren und Stoppen der Versorgung eines ersten vorgemischten Brennstoffs, dann
Beginnen einer Versorgung mit einem zweiten vorgemischten Brennstoff,
**dadurch gekennzeichnet, dass**
in einer Zwischenphase (5), nachdem die Versorgung mit dem ersten vorgemischten Brennstoff gestoppt ist und bevor die Versorgung mit dem zweiten vorgemischten Brennstoff beginnt, die Verbrennungsvorrichtung mit einem oder mehreren Pilotbrennstoffen (12, 13) betrieben wird, die nur Diffusionsflammen erzeugen.

2. Verfahren nach Anspruch 1, **dadurch gekennzeichnet, dass** die Pilotbrennstoffe (12, 13) einen ersten und einen zweiten Pilotbrennstoff umfassen, wobei während der Zwischenphase (5) beide Pilotbrennstoffe (12, 13) zugeführt werden.

3. Verfahren nach Anspruch 2, **dadurch gekennzeichnet, dass** während der Zwischenphase (5) der erste und der zweite Pilotbrennstoff (12, 13) den Betrieb der Verbrennungsvorrichtung vollständig unterstützen.

4. Verfahren nach Anspruch 2, **dadurch gekennzeichnet, dass** sowohl der erste als auch der zweite Pilotbrennstoff (12, 13) zuerst zusammen mit dem ersten vorgemischten Brennstoff (10) und dann zusammen mit dem zweiten vorgemischten Brennstoff (11) eingespritzt werden.

5. Verfahren nach Anspruch 4, **dadurch gekennzeichnet, dass** die Versorgung mit dem ersten Pilotbrennstoff beginnt, bevor die Versorgung mit dem zweiten Pilotbrennstoff beginnt.

6. Verfahren nach Anspruch 3, **dadurch gekennzeichnet, dass** die Versorgung mit dem ersten Pilotbrennstoff endet, bevor die Versorgung mit dem zweiten Pilotbrennstoff endet.

7. Verfahren nach Anspruch 1, **dadurch gekennzeichnet, dass** der erste vorgemischte Brennstoff (10) ein gasförmiger Brennstoff ist und der zweite vorgemischte Brennstoff (11) ein flüssiger Brennstoff ist oder umgekehrt.

8. Verfahren nach Anspruch 7, **dadurch gekennzeichnet, dass** dann, wenn der erste vorgemischte Brennstoff (10) ein gasförmiger Brennstoff ist, auch der erste Pilotbrennstoff (12) ein gasförmiger Brennstoff ist, und dann, wenn der erste vorgemischte Brennstoff (10) ein flüssiger Brennstoff ist, auch der erste Pilotbrennstoff (12) ein flüssiger Brennstoff ist.

9. Verfahren nach Anspruch 7, **dadurch gekennzeichnet, dass** dann, wenn der zweite vorgemischte Brennstoff (11) ein gasförmiger Brennstoff ist, auch der zweite Pilotbrennstoff (13) ein gasförmiger Brennstoff ist, und dann, wenn der zweite vorgemischte Brennstoff (11) ein flüssiger Brennstoff ist, auch der zweite Pilotbrennstoff (13) ein flüssiger Brennstoff ist.

10. Verfahren nach Anspruch 7, **dadurch gekennzeichnet, dass** der erste vorgemischte Brennstoff (10) und der erste Pilotbrennstoff (12) derselbe Brennstoff sind und der zweite vorgemischte Brennstoff (11) und der zweite Pilotbrennstoff (13) derselbe Brennstoff sind.

## Revendications

1. Procédé destiné à commuter le fonctionnement d'un dispositif de combustion avec un premier combustible de prémélange (10), vers un fonctionnement avec un second combustible de prémélange (11) comprenant les étapes consistant à :
réduire et arrêter l'approvisionnement en premier combustible de prémélange ; puis :
démarrer l'approvisionnement en second combustible de prémélange ;
**caractérisé en ce que** :
dans une phase intermédiaire (5), après la fin de l'approvisionnement en premier combustible de prémélange, et avant le début de l'approvisionnement en second combustible de prémélange, le dispositif de combustion est actionné avec un ou plusieurs combustibles pilotes (12, 13) qui ne génèrent que des flammes de diffusion.

2. Procédé selon la revendication 1, **caractérisé en ce que** les combustibles pilotes (12, 13) comprennent des premier et second combustibles pilotes, dans lequel, au cours de la phase intermédiaire (5), les deux combustibles pilotes (12, 13) sont fournis.

3. Procédé selon la revendication 2, **caractérisé en ce que**, au cours de la phase intermédiaire (5), les premier et second combustibles pilotes (12, 13) supportent pleinement le fonctionnement du dispositif de combustion.

4. Procédé selon la revendication 2, **caractérisé en ce que** les premier et second combustibles pilotes (12, 13) sont d'abord injectés avec le premier combustible de prémélange (10), et sont ensuite injectés avec le second combustible de prémélange (11).

5. Procédé selon la revendication 4, **caractérisé en ce que** l'approvisionnement en premier combustible pilote débute avant que ne débute l'approvisionnement en second combustible pilote.

6. Procédé selon la revendication 3, **caractérisé en ce que** l'approvisionnement en premier combustible pilote se termine avant que ne se termine l'approvisionnement en second combustible pilote.

7. Procédé selon la revendication 1, **caractérisé en ce que** le premier combustible de prémélange (10) est un combustible gazeux, et **en ce que** le second combustible de prémélange (11) est un combustible liquide ou vice versa.

8. Procédé selon la revendication 7, **caractérisé en ce que** lorsque le premier combustible de prémélange (10) est un combustible gazeux, le premier combustible pilote (12) est également un combustible gazeux, et lorsque le premier combustible de prémélange (10) est un combustible liquide, le premier combustible pilote (12) est également un combustible liquide.

9. Procédé selon la revendication 7, **caractérisé en ce que** lorsque le second combustible de prémélange (11) est un combustible gazeux, le second combustible pilote (13) est également un combustible gazeux, et lorsque le second combustible de prémélange (11) est un combustible liquide, le second combustible pilote (13) est également un combustible liquide.

10. Procédé selon la revendication 7, **caractérisé en ce que** le premier combustible de prémélange (10) et le premier combustible pilote (12) sont le même combustible, et **en ce que** le second combustible de prémélange (11) et le second combustible pilote (13) sont le même combustible.
